# EUROPÄISCHE PATENTANMELDUNG

(11) **EP 1 980 768 A2**
(43) Veröffentlichungstag der Anmeldung: **15.10.2008**
(21) Anmeldenummer: 08006960.2
(22) Anmeldetag: 08.04.2008
(51) Int. Cl.: F16D 65/097

(54) **Scheibenbremse**

(30) Priorität: 12.04.2007 DE 102007017251
(71) Anmelder: Knorr-Bremse Systeme Für Nutzfahrzeuge GmbH, 80809 München (DE)
(72) Erfinder: Fischer, Rudolf, 85435 Erding (DE); Klingner, Matthias, 82272 Moorenweis (DE); Stich, Johann, 94560 Offenberg (DE)
(74) Vertreter: Mattusch, Gundula

(57) **Zusammenfassung**

Eine Scheibenbremse für ein Nutzfahrzeug, mit einem Bremssattel (1), einer Bremsscheibe (2) sowie Bremsbelägen (3), die aus Belagträgerplatten (4) und Reibbelägen (5) bestehen, soll so gestaltet werden, dass jeder Bremsbelag (3) eindeutig der Scheibenbremse zugeordnet werden kann, so dass ein Austausch der Originalbremsbeläge (3) erkennbar ist.

Erfindungsgemäß werden die Belagträgerplatten (4), die Belaghaltefedern (6) oder der Belaghaltebügel (7) mit Identifizierungsfeldern (9) versehen, die mit Ziffern, Buchstaben, auch in Kombination, gebildet sind. Zusätzlich können firmenspezifische Symbole mit eingebracht werden.

Alternativ ist es auch möglich, dass ein Austausch der Bremsbeläge (3) nur dann möglich ist, wenn zuvor ein mechanisches Sicherungselement (14, 15) zerstört wurde.

Die erfindungsgemäße Scheibenbremse ist besonders für Lastkraftwagen und Anhänger geeignet.

## Beschreibung

Die Erfindung betrifft eine Scheibenbremse, insbesondere für ein Nutzfahrzeug gemäß den Merkmalen des Oberbegriffes des Anspruches 1.

Eine Scheibenbremse ist in vielen Varianten bekannt, wobei der Grundaufbau gleichbleibend ist. Die Bremsbeläge einer Scheibenbremse sind aufgrund der beim Bremsvorgang auftretenden hohen Reibungskräfte als Verschleißteile anzusehen, die intervallmäßig gewechselt werden müssen. Für die Bremsbeläge müssen jedoch die Lieferer eine Gewährleistung übernehmen.

Es werden jedoch nicht immer die Originalbremsbeläge des Lieferers eingesetzt, sondern auch preiswertere Plagiate, in einer verminderten Qualität. Im Falle einer Gewährleistung muss der Nachweis erbracht werden, dass es sich um ein Plagiat handelt.

Dazu wird jeder Bremsbelag mit einer Identifikationsnummer versehen, die den Bremsbelag eindeutig beschreibt. Diese Identifikationsnummer wird vom Belaghersteller nach einer Vorgabe durch eine Zeichnung an der Belagträgerplatte durch ein Prägeverfahren angebracht. Dadurch ist zwar eine eindeutige Identifizierung des Bremsbelages sichergestellt. Die Zuordnung zu der Bremse ist jedoch damit nicht möglich.

Der Erfindung liegt die Aufgabe zugrunde, eine Scheibenbremse der gattungsgemäßen Art so zu gestalten, dass jeder Bremsbelag eindeutig der Scheibenbremse zugeordnet werden kann, so dass ein Austausch des Originalbremsbelages erkennbar ist.

Gemäß einem ersten Vorschlag wird die gestellte Aufgabe gelöst, indem der Bremsbelag und/oder mindestens eine der Belaghaltefedern und/oder der Belaghaltebügel mit wenigstens einem durch Materialverformung oder durch Materialbearbeitung erzeugtes Identifizierungsfeld versehen ist.

Durch das Identifizierungsfeld wird der Bremsbelag kodiert, so dass bei einer Überprüfung innerhalb eines Gewährleistungszeitraumes festgestellt werden kann, ob die geltend gemachten Ansprüche berechtigt sind oder ob sie abgewiesen werden können, da die Originalbremsbeläge unberechtigt ausgetauscht wurden. Durch die eindeutige Zuordnung des Bremsbelages zur Scheibenbremse können deshalb Forderungen abgewiesen werden. Darüber hinaus besteht für den Hersteller der Scheibenbremse die Möglichkeit, die Daten statistisch auszuwerten und Rückschlüsse auf die Lebensdauer insbesondere von Erstausrüster-Belägen zu ziehen. Bei einem geeigneten Verfahren zur Anbringung des Identifikationsfeldes könnte außerdem das Produktionsdatum eingebracht werden.

Das Identifizierungsfeld kann aus Buchstaben, aus Ziffern oder aus einer Kombination von Ziffern und Buchstaben bestehen. Darüber hinaus können auch herstellerspezifische Symbole aufgebracht werden.

In einer ersten Ausführung ist vorgesehen, dass zumindest eine der Belagträgerplatten auf der Umfangsfläche mit wenigstens einem Identifizierungsfeld versehen ist. Bei einer solchen Ausführung geht man davon aus, dass stets beide Bremsbeläge gewechselt werden, so dass ein Identifizierungsfeld für die Zuordnung zur Scheibenbremse ausreichend ist. Es ist jedoch in einer bevorzugten Ausführung vorgesehen, dass beide Belagträgerplatten mit wenigstens einem Identifizierungsfeld versehen sind.

In einer zweiten Ausführung ist vorgesehen, dass jedes Identifizierungsfeld auf einem segmentartigen Radialsteg aufgebracht ist, der an die Umfangsfläche der Belagträgerplatte angesetzt oder angeformt ist. Dieser Radialsteg steht dann gegenüber der Umfangsfläche des zugeordneten Reibbelages in radialer Richtung vor.

Gemäß einer dritten Ausführungsform ist vorgesehen, dass das Identifizierungsfeld auf einem im Querschnitt U- oder winkelförmig gestalteten Einlegeteil angebracht ist. Dieses Einlegeteil kann bei einer winkelförmigen Gestaltung so ausgelegt sein, dass der parallel zur Belagträgerplatte stehende Schenkel entweder an der dem Reibbelag abgewandten Seite oder zwischen dem Reibbelag und der Trägerplatte steht. Der das Identifizierungsfeld aufweisende Schenkel sollte jedoch nur den Reibbelag um einen relativ geringen Bereich übergreifen, da es ansonsten durch die Abnutzung des Reibbelages zu einem Kontakt mit der Bremsscheibe führen würde. Besonders vorteilhaft ist, wenn dieses Einlegeteil aus einem korrosionsbeständigen Material, vorzugsweise aus rostfreiem Stahl besteht, da dann das Identifizierungsfeld stets lesbar ist.

Bei den zuvor beschriebenen Ausführungen ist in bevorzugter Ausführung vorgesehen, dass jedes Identifizierungsfeld angrenzend an die Stirnenden der Belaghaltefedern angebracht ist.

Gemäß einer vierten Ausführung ist noch vorgesehen, dass das Einlegeteil plättchenförmig gestaltet ist und fest mit der Belaghaltefeder verbunden ist. Diese Verbindung könnte durch mechanische Verbindungselemente oder aber auch durch eine Punktschweißung hergestellt werden.

Gemäß einem zweiten Vorschlag zur Lösung der gestellten Aufgabe ist vorgesehen, dass der Belaghaltebügel mittels wenigstens eines mechanischen Sicherungselementes blockiert ist. Durch dieses Sicherungselement wird der Belaghaltebügel sinngemäß versiegelt oder plombiert. Der Belaghaltebügel kann dann nur geöffnet werden, wenn dieses mechanische Sicherungselement zerstört wird. Es ist deshalb im Fall einer Gewährleistung erkennbar, dass die Originalbremsbeläge ausgetauscht wurden.

Gemäß einer ersten Ausführung ist vorgesehen, dass das Sicherungselement ein formstabiles Plättchen ist, welches auf die der Formfeder zugeordnete Stirnfläche des den Belaghaltebügel verriegelnden Verschlussbolzen aufgesetzt ist. Dieses Plättchen ist auf die Stirnfläche beispielsweise durch Klebung oder Schweißung aufgesetzt, so dass im Falle des Öffnens des Belaghaltebügels dieses vorher zerstört werden muss.

Gemäß einer zweiten Ausführung ist vorgesehen, dass das mechanische Sicherungselement ein Stift oder ein Niet ist, der fest am Bremssattel angeordnet ist, und der in eine Bohrung des Belaghaltebügels eingreift. Diese Bohrung liegt in dem dem Verschlussbolzen zugeordneten Endbereich des Belaghaltebügels. Der Stift bzw. der Niet wird gestaucht, so dass ein Kopf entsteht. Das Öffnen des Belaghaltebügels ist dann wiederum nur durch Zerstörung des Stiftes oder des Nietes möglich.

Anhand der beiliegenden Zeichnungen wird die Erfindung noch näher erläutert.

Es zeigen:
- Figuren 1 - 4: Teilausschnitte einer erfindungsgemäßen Scheibenbremse bei der das Identifizierungsfeld an unterschiedlichen Stellen ange-ordnet ist
- Figur 5: eine Teilansicht der erfindungsgemäßen Scheibenbremse mit einem Sicherungselement in Form eines Plättchens und
- Figur 6: eine Teilansicht der erfindungsgemäßen Scheibenbremse mit einem mechanischen Sicherungselement in Form eines Nietes.

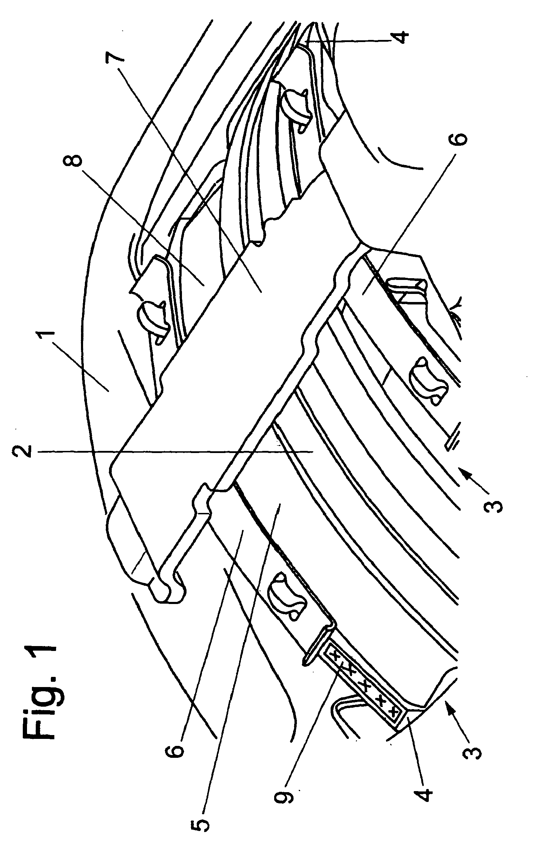

In den Figuren 1 bis 6 ist in einer Teilansicht eine Scheibenbremse, insbesondere für ein Nutzfahrzeug dargestellt, mit einem eine Bremsscheibe 2 umfassenden Bremssattel 1, in dem Bremsbeläge 3 angeordnet sind, die bei einem Bremsvorgang die Bremsscheibe 2 kontaktieren, wobei jeder Bremsbelag 3 aus einer Belagträgerplatte 4 und einem Reibbelag 5 besteht, der mit der Belagträgerplatte 4 fest verbunden ist.

Zur radialen Verspannung der Bremsbeläge 3 sind Belaghaltefedern 6 vorgesehen, von denen jeweils eine am Außenrand der zugeordneten Belagträgerplatte 4 anliegt.

Die Scheibenbremse ist ferner mit einem Belaghaltebügel 7 ausgestattet, der sich quer zur Drehrichtung der Bremsscheibe 2 erstreckt und dabei eine Montageöffnung 8 des Bremssattels 1 überspannt. Der Belaghaltebügel 7 stützt sich an den Belaghaltefedem 6 ab und hält diese nieder.

Bei der Ausführung nach der Figur 1 ist direkt auf der Umfangsfläche der Belagträgerplatte 4 ein Identifizierungsfeld 9 vorgesehen. Entgegen der Darstellung sind in der Praxis auf jeder Belagträgerplatte 4 mindestens zwei Identifizierungsfelder 9 vorgesehen, die angrenzend an die Stirnendbereiche der Belaghaltefedern 6 angeordnet sind.

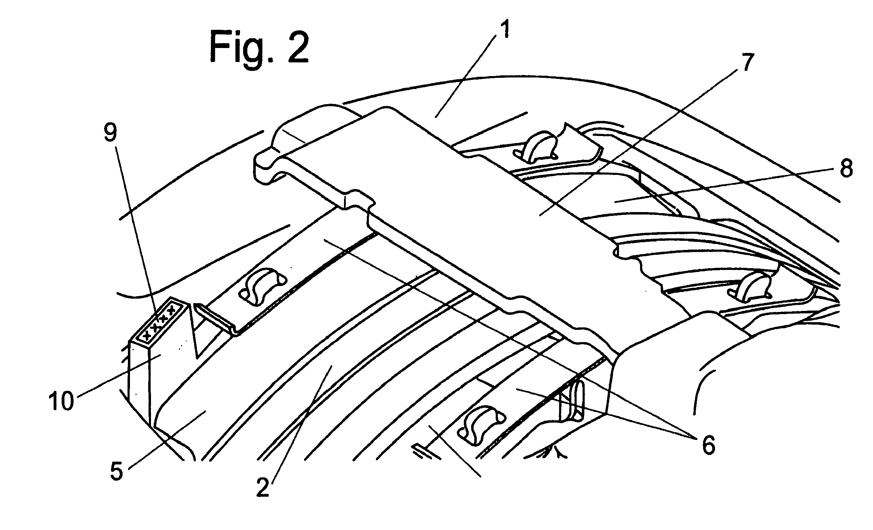

Bei der Ausführung nach der Figur 2 ist das Identifizierungsfeld 9 bzw. sind die Identifizierungsfelder 9 an jeweils einem segmentartigen Radialsteg 10 vorgesehen, wobei dieser Radialsteg 10 an die jeweilige Belagträgerplatte 4 angesetzt oder einstückig angeformt ist.

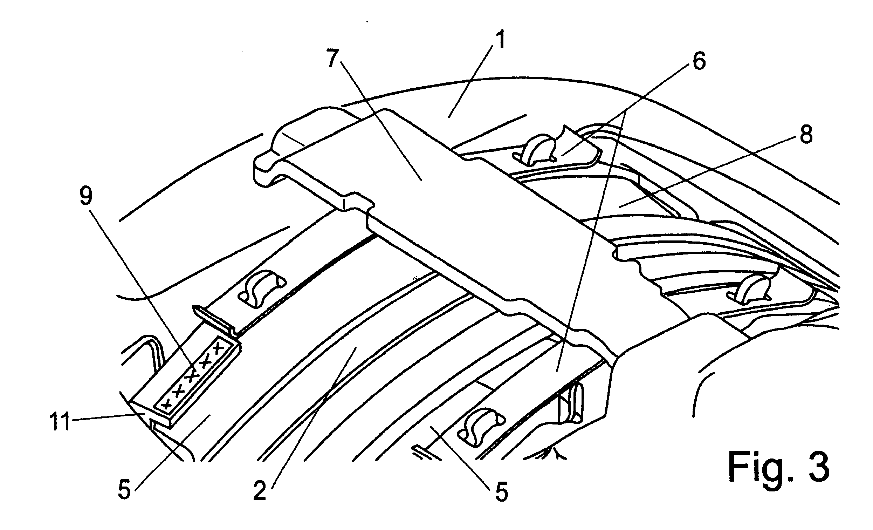

Bei der Ausführung nach der Figur 3 ist jedes Identifizierungsfeld 9 an oder in einem Einlegeteil 11 vorgesehen, wobei das Einlegeteil 11 aus einem korrosionsbeständigen Material gefertigt ist und als separates Teil während der Montage der Bremse mit eingesetzt werden muss. Das Einlegeteil 9 kann winkelförmig oder U-förmig gestaltet sein, so dass entweder ein Steg an der Außenseite der Belagträgerplatte 4 oder dass beide Stege an den beiden Seiten der Belagträgerplatte 4 anliegen.

Während bei den Ausführungen gemäß den Figuren 1 und 2 das Identifizierungsfeld 9 auch noch nach der Montage der Scheibenbremse hergestellt werden kann, muss das noch nicht montierte Einlegeteil nach der Figur 3 vorab mit dem Identifizierungsfeld 9 versehen werden. Auch bei der Ausführung nach der Figur 3 liegen die Identifizierungsfelder 9 angrenzend an die Stirnendbereiche der Belaghaltefedem 6.

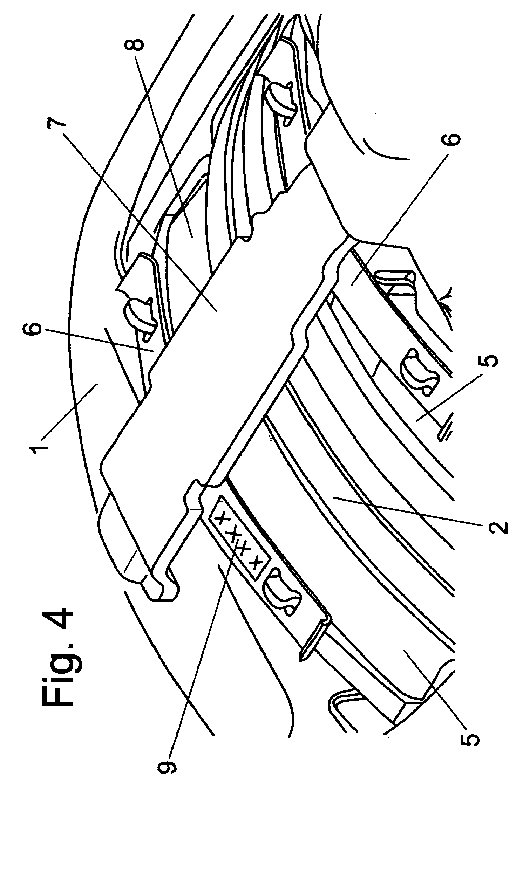

Bei der Ausführung nach der Figur 4 ist jede Belaghaltefeder 6 mit einem Identifizierungsfeld 9 versehen. In nicht näher dargestellter Weise ist jedoch bei dieser Ausführung jede Belaghaltefeder 6 fest mit der Belagträgerplatte 4 verbunden, so dass es nicht möglich ist, die Belaghaltefedern 6 von den Belagträgerplatten 4 abzunehmen und das Identifizierungsfeld 9 zu manipulieren.

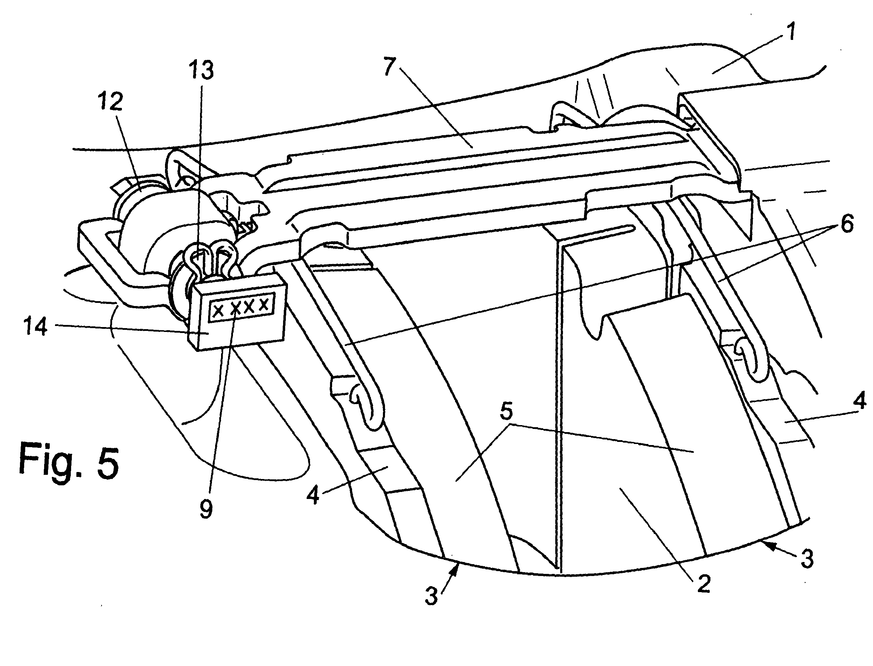

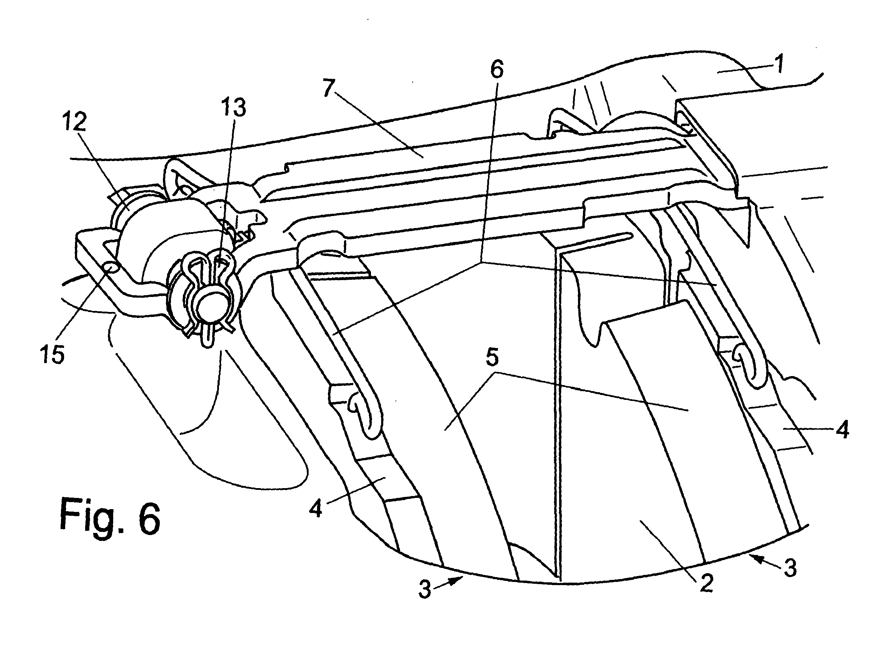

Bei den Ausführungen gemäß den Figuren 5 und 6 ist noch dargestellt, dass der Belaghaltebügel 7 an einer Seite durch einen Verschlussbolzen 12 gegen Aufklappen gesichert ist. Der Verschlussbolzen 12 ist an einem Stirnende durch eine Formfeder 13 gegen axiale Verschiebung gesichert. Zum Öffnen des Belaghaltebügels 7 muss der Verschlussbolzen 12 aus der Bohrung herausgezogen werden, dazu ist zuvor jedoch die Formfeder 13 zu entfernen. Um auch bei einer solchen Ausführung den Nachweis eines unberechtigten Austausches der Bremsbeläge 3 zu belegen, ist auf das der Formfeder 13 zugeordnete Stirnende des Verschlussbolzens 12 ein Plättchen 14 fest aufgesetzt, so dass der Verschlussbolzen 12 nur aus der Bohrung herausgezogen werden kann, wenn zuvor das Plättchen 14 entfernt wurde.

Bei der Ausführung nach der Figur 6 ist seitlich neben dem Verschlussbolzen 12 der Belaghaltebügel 7 mit einer Bohrung versehen, in die ein Stift 15 oder ein Niet eingreift, der fest am Bremssattel 1 angesetzt ist. Nach dem Schließen des Belaghaltebügels 7 wird der Stift 15 oder der Niet gestaucht, so dass der Belaghaltebügel 7 nur geöffnet werden kann, wenn der Stift 15 oder der Niet zerstört oder entfernt wird.

Bei den Ausführungen gemäß den Figuren 5 und 6 kann auf ein Identifizierungsfeld 9 verzichtet werden. Es ist jedoch insbesondere bei der Ausführung nach der Figur 5 auch noch möglich, dass das Plättchen 14 mit einem Identifizierungsfeld 9 versehen wird.

Jedes Identifizierungsfeld 9 könnte durch Materialverformung, beispielsweise mittels eines Werkzeuges oder durch eine Materialbearbeitung, beispielsweise mit einem Laserstrahl hergestellt werden.

Die Erfindung ist nicht auf die dargestellten Ausführungsbeispiele beschränkt. Wesentlich ist, dass die Scheibenbremse, insbesondere die Belagträgerplatten 4 mit Identiflzierungsfeldern 9 versehen sind, die mit entsprechenden Feldern an der Scheibenbremse übereinstimmen. Alternativ ist es jedoch auch möglich, dass die Scheibenbremse so gestaltet wird, dass zum Wechseln der Bremsbeläge 3 mechanische Sicherungselemente 14, 15 zerstört oder entfernt werden müssen.

## Patentansprüche

1. Scheibenbremse, insbesondere für ein Nutzfahrzeug, mit einem Bremssattel (1), der eine Bremsscheibe (2) aufweist, an die bei einem Bremsvorgang beidseitig angeordnete Bremsbeläge (3) pressbar sind, die aus Belagträgerplatten (4) und Reibbelägen (5) bestehen, mit einem am Bremssattel (1) quer zur Drehrichtung der Bremsscheibe (2) festgelegten Belaghaltebügel (7) und mit an den Umfangsflächen der Belagträgerplatten (4) anliegenden Belaghaltefedern (6), **dadurch gekennzeichnet, dass** mindestens ein Bremsbelag (3) und/oder mindestens eine der Belaghaltefedern (6) und/oder der Belaghaltebügel (7) mit wenigstens einem durch Materialverformung oder durch Materialbearbeitung erzeugten Identifizierungsfeld (9) versehen ist.

2. Scheibenbremse nach Anspruch 1, **dadurch gekennzeichnet, dass** zumindest eine der Belagträgerplatten (4) auf der Umfangsfläche mit wenigstens einem Identifizierungsfeld (9) versehen ist.

3. Scheibenbremse nach Anspruch 2, **dadurch gekennzeichnet, dass** beide Belagträgerplatten (4) auf der Umfangsfläche mit wenigstens einem Identifizierungsfeld (9) versehen sind.

4. Scheibenbremse nach Anspruch 1, **dadurch gekennzeichnet, dass** jedes Identifizierungsfeld (9) auf einem segmentartigen Radialsteg (10) aufgebracht ist, der an die Umfangsfläche der Belagträgerplatten (4) angeformt oder angesetzt ist.

5. Scheibenbremse nach Anspruch 1, **dadurch gekennzeichnet, dass** jedes Identifizierungsfeld (9) auf einen im Querschnitt winkelförmig oder U-förmig gestalteten Einlegeteil (14) angebracht ist.

6. Scheibenbremse nach Anspruch 5, **dadurch gekennzeichnet, dass** ein Schenkel des Einlegeteils (11) den der Belagträgerplatte (4) zugewandten Randbereich des Reibbelages (5) übergreift.

7. Scheibenbremse nach einem oder mehreren der vorstehenden Ansprüche, **dadurch gekennzeichnet, dass** das Einlegeteil (11) plättchenförmig gestaltet und fest mit einer Belaghaltefeder (6) verbunden ist.

8. Scheibenbremse nach Anspruch 5 oder 6 oder 7, **dadurch gekennzeichnet, dass** das Einlegeteil (11) aus korrosionsbeständigem Material besteht.

9. Scheibenbremse nach einem oder mehreren der vorstehenden Ansprüche, **dadurch gekennzeichnet, dass** jedes Identifizierungsfeld (9) angrenzend an die Stirnenden der Belaghaltefedern (6) angebracht ist.

10. Scheibenbremse nach Anspruch 1, **dadurch gekennzeichnet, dass** jedes Identifizierungsfeld (9) auf mindestens einer Belaghaltefeder (6), vorzugsweise auf beiden Belaghaltefedern (6) vorgesehen ist.

11. Scheibenbremse nach Anspruch 1, **dadurch gekennzeichnet, dass** der Belaghaltebügel (7) mittels wenigstens einem mechanischen sowie unlösbaren Sicherungselement zusätzlich gesichert ist.

12. Scheibenbremse nach Anspruch 12, **dadurch gekennzeichnet, dass** das mechanische Sicherungselement ein auf das der Formfeder (13) zugeordnete Stirnende des Verschlussbolzens (12) festgesetztes Plättchen (14) ist.

13. Scheibenbremse nach Anspruch 11, **dadurch gekennzeichnet, dass** das mechanische Sicherungselement ein Stift (15) oder ein Niet ist, der fest am Bremssattel (1) angesetzt ist und eine Bohrung des Belaghaltebügels (7) durchdringt, und dass der Stift (15) oder der Niet gestaucht ist.
